# EUROPÄISCHE PATENTSCHRIFT

(11) **EP 2 191 231 B1**
(45) Veröffentlichungstag und Bekanntmachung des Hinweises auf die Patenterteilung: **10.09.2014**
(21) Anmeldenummer: 08775075.8
(22) Anmeldetag: 15.07.2008
(51) Int. Cl.: G01C 3/00, G01C 3/08, G01C 15/02

(54) **ENTFERNUNGSMESSER SOWIE ENTFERNUNGSMESSSYSTEM**
DISTANCE METER AND DISTANCE MEASURING SYSTEM
APPAREIL DE MESURE DE DISTANCE ET SYSTÈME DE MESURE DE DISTANCE

(30) Priorität: 12.09.2007 DE 102007043495
(43) Veröffentlichungstag der Anmeldung: 02.06.2010
(73) Patentinhaber: Robert Bosch GmbH, 70442 Stuttgart (DE)
(72) Erfinder: TIEDE, Steffen, 71083 Herrenberg (DE)
(86) Internationale Anmeldenummer: PCT/EP2008/059215
(87) Internationale Veröffentlichungsnummer: WO 2009/033855

(56) Entgegenhaltungen:
- EP-A- 1 475 608
- EP-A1- 2 002 284
- WO-A-2005/121703
- WO-A-2007/110311

## Beschreibung

### Stand der Technik

Die Erfindung betrifft einen Entfernungsmesser, insbesondere einen Laserentfernungsmesser gemäß dem Oberbegriff des Anspruchs 1 sowie ein Entfernungsmesssystem gemäß Anspruch 15 mit einem derartigen Entfernungsmesser.

Es sind als Handgerät ausgebildete Entfernungsmesser zur berührungslosen Distanzmessung zwischen einem Bezugspunkt des Entfernungsmessers und einem von dem Entfernungsmesser beabstandeten Element bekannt. Die Distanzmessung erfolgt dabei in der Regel durch Ultraschall oder auf elektrooptischem Weg mittels eines Lasers, insbesondere indem die Laufzeiten eines ausgesendeten und an dem beabstandeten Element reflektierten Messsignals gemessen und daraus die auf einem Display ablesbare Distanz ermittelt wird. Mit den bekannten Entfernungsmessern können zwar Abstände, auch über große Entfernungen, exakt und schnell bestimmt werden; die bekannten Entfernungsmesser sind jedoch nicht für messbegleitende Tätigkeiten einsetzbar. So ist es insbesondere anders als bei direkt messenden Entfernungsmessern, wie einem Gliedermessstab, einem Bandmaß oder einem Lineal, nicht möglich, eine Strecke mit einer vorgebbaren Messlänge unmittelbar auf einen zu vermessenden Gegenstand zu übertragen.

Aus der EP 1 475 608 A2 ist ein elektrooptische Handdistanzmessgerät mit einem handhabbaren Gehäuse und einem elektrooptische Distanzmessmodul mit einer elektrischen Strahlquelle zur Erzeugung eines optischen Messstrahls, einem Strahlempfänger zum Empfangen von Teilen des von einem Messobjekt zurück gestreuten Messstrahls und einem Ausgabemittel für die ermittelte Distanz bekannt. Die Vorrichtung der EP 1 475 608 A2 verfügt darüber hinaus zusätzlich über ein mechanisches Distanzmessmodul. Das mechanische Distanzmessmodul kann dabei in Form eines Maßbandes oder eines Glieder Maßstabes ausgebildet sein.

Aus der nachveröffentlichten WO 2007/110311 A ist eine Vorrichtung zur berührungslosen Distanzmessung, insbesondere eine handgehaltene Vorrichtung, welche mittels eines ausgesandten Messsignals, insbesondere mittels eines modulierten Messsignals, die Bestimmung eines Abstandes d zwischen einem Zielobjekt und zumindest einem Referenzpunkt der Vorrichtung ermöglicht. Die Vorrichtung der WO 2007/110311 A weist zumindest ein Gehäuse mit einem dem zu vermessenden Objekt zugewandten ersten Ende und einem, von dem zu vermessenden Objekt abgewandten, zweiten Ende, sowie eine Ausgabeeinheit zur Wiedergabe von Messergebnissen auf.

Erfindungsgemäß schlägt die WO 2007/110311, dass zumindest einem Teilabschnitt der Strecke zwischen dem zu vermessenden Objekt und dem abgewandten Ende des Gehäuses über eine mittels der Ausgabeeinheit darstellbare Längenmessskala mehrere Abstandsmesswerte zuzuordnen sind.

### Offenbarung der Erfindung

### Technische Aufgabe

Der Erfindung liegt daher die Aufgabe zugrunde, einen Entfernungsmesser derart weiterzubilden, dass mit diesem vorgebbare Strecken (Abstände) auf ein Messobjekt übertragbar sind. Ferner besteht die Aufgabe darin, ein entsprechend verbessertes Entfernungsmesssystem vorzuschlagen.

### Technische Lösung

Diese Aufgabe wird hinsichtlich des Entfernungsmessers mit den Merkmalen des Anspruchs 1 und hinsichtlich des Entfernungsmesssystems mit den Merkmalen des Anspruchs 15 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen.

Der Erfindung liegt der Gedanke zugrunde, einen gattungsgemäßen Entfernungsmesser, derart weiterzubilden, dass dieser, insbesondere als Handgerät ausgebildete Entfernungsmesser einer Bedienperson eine Verstellrichtung signalisiert, in der der Entfernungsmesser relativ zu einem beabstandeten Element und/oder, insbesondere falls es sich bei dem verstellbaren Element um ein bewegbares Element handelt, dieses relativ zu dem Entfernungsmesser verstellt werden muss, damit sich ein vorgegebener Abstand zwischen einem festen, einem einstellbaren oder einem automatisch wandernden Bezugspunkt des Entfernungsmessers und dem beabstandeten Element, also eine vorgebbare Strecke, einstellt. Vorzugsweise umfasst der Entfernungsmesser auch Anzeigemittel (Display) zur Darstellung des vorgegebenen Abstandes und/oder eines gemessenen Abstandes als Zahlenwert.

Zum Übertragen des vorgebbaren Abstandes bzw. der vorgebbaren Strecke auf ein Messobjekt wird bevorzugt derart vorgegangen, dass der Entfernungsmesser zunächst in einem geschätzten, vorläufigen Abstand zu dem beabstandeten Element positioniert wird, wobei der vorläufige Abstand bevorzugt näherungsweise dem vorgegebenen Abstand entspricht. Durch Aktivieren eines, insbesondere kontinuierlich messenden Messsignals, vorzugsweise eines Messlaserstrahls wird der vorläufige Abstand zwischen dem Bezugspunkt des Entfernungsmessers und dem beabstandeten Element gemessen und auf einem Display dargestellt. Gemäß dem Konzept der Erfindung signalisiert der Entfernungsmesser der Bedienperson, in welcher Richtung der Entfernungsmesser relativ zu dem beabstandeten Element verstellt werden muss, damit sich der vorgegebene Abstand zwischen dem Bezugspunkt und dem beabstandeten Element, also die vorgegebene Strecke, einstellt, die dann auf dem zu vermessenden Objekt geeignet, insbesondere unter Zuhilfenahme eines Stiftes, markiert werden kann, die vorgegebene Strecke also auf das Messobjekt übertragen wird. Wird von der Bedienperson der Entfernungsmesser über die gewünschte Verstellposition, in der der vorgegebene Abstand zwischen dem Bezugspunkt des Entfernungsmessers und dem beabstandeten Element eingestellt ist, beispielsweise durch eine zu schnelle Verstellbewegung überschritten, so ist es vorteilhaft, wenn der Entfernungsmesser derart ausgebildet ist, dass er ab dem Überschreiten der gewünschten Verstellposition eine entgegengesetzte Verstellrichtung signalisiert, so dass die Bedienperson den Entfernungsmesser wieder, vorzugsweise langsam, in Richtung der gewünschten Verstellposition, also in Richtung des Sollwertes für die Abstandsmessung, bewegen kann.

Es liegt im Rahmen der Erfindung, als Messsignal Ultraschall einzusetzen. Bevorzugt ist jedoch eine elektrooptische Ausführung des Entfernungsmessers, bei der das Messsignal von einem Laserstrahl gebildet ist. Bevorzugt erfolgt dabei die kontinuierliche Messung des Abstandes auf Basis einer Laufzeitmessung des an dem beabstandeten Element reflektierten Messstrahls. Phasendifferenzmessungen sind alternativ möglich.

Ein nach dem Konzept der Erfindung ausgebildeter Entfernungsmesser bzw. die Mittel zur Signalisierung der Verstellrichtung stellen eine optimale Orientierungshilfe für das schnelle Auffinden des vorgegebenen Abstandes bzw. der vorgegebenen Strecke dar. Bevorzugt kann der nach dem Konzept der Erfindung ausgebildete Entfernungsmesser auch in bisher bekannter Weise für einfache Abstandsmessungen eingesetzt werden.

Bei dem beabstandeten Element (Messobjekt) kann es sich sowohl um ein unbewegliches Element, z.B. eine Wand oder einen Schrank, oder aber um ein verstellbares, insbesondere als Messhilfe dienendes Element zur Reflektion der Messstrahlung handeln.

Von besonderem Vorteil ist eine Ausführungsform des Entfernungsmessers, bei der nicht nur die Verstellrichtung signalisiert wird, in der der Entfernungsmesser und/oder das beabstandete Element relativ zueinander verstellt werden müssen, sondern bei dem zusätzlich Mittel zur Signalisierung der Größe der Verstellstrecke vorgesehen sind. Es wird der Bedienperson also signalisiert, ob die Strecke, um die der Entfernungsmesser und/oder das beabstandete Element relativ zueinander bewegt werden müssen, groß ist, also eine große Verstellbewegung notwendig ist, oder ob die Verstellstrecke lediglich sehr klein ist, so dass in der Folge lediglich eine Feinverstellung des Abstandes zwischen Entfernungsmesser und beabstandetem Element vorgenommen werden muss.

In Weiterbildung der Erfindung ist vorteilhafterweise vorgesehen, dass der Entfernungsmesser nicht nur die Verstellrichtung und/oder die Größe der Verstellstrecke angibt, d.h. signalisiert, sondern durch ein besonderes Signal auch das Erreichen der gewünschten Verstellposition signalisiert.

Zur Realisierung der Signalisierung der Verstellrichtung und/oder der Größe der Verstellstrecke und/oder des Erreichens der gewünschten Verstellposition gibt es verschiedenste Möglichkeiten. Bevorzugt erfolgt die Signalisierung durch optische und/oder akustische Signale. Dabei dienen die optischen Signalisierungsmittel zur Visualisierung der Verstellrichtung und/oder der Verstellstrecke und/oder des Erreichens der gewünschten Verstellposition unabhängig von der zahlenmäßigen Anzeige des momentanen Abstandes zwischen dem Bezugspunkt und dem beabstandeten Element.

Von besonderem Vorteil ist eine Ausführungsform, bei der optische Anzeigemittel vorgesehen sind, mit denen die Verstellrichtung und/oder die Größe der Verstellstrecke und/oder das Erreichen der gewünschten Verstellposition visualisierbar ist. In einer einfachsten Ausführungsform handelt es sich bei den Anzeigemitteln um zwei Leuchtelemente, beispielsweise LEDs, von denen jede jeweils eine Verstellrichtung kennzeichnet. Gemäß einer bevorzugten Ausführungsform sind die optischen Anzeigemittel derart ausgebildet, dass sie zwei sich in einander entgegengesetzte Richtungen erstreckende optische Signale erzeugen können, wobei die Richtung, in der sich das optische Signal erstreckt, die Verstellrichtung und die Längenerstreckung des optischen Signals die Größe der Verstellstrecke kennzeichnet. Das Erreichen der gewünschten Verstellposition kann beispielsweise dadurch gekennzeichnet sein, dass in keine der beiden Richtungen ein optisches Signal erzeugt wird, oder dadurch, dass in beide Richtungen ein optisches Signal erzeugt wird, oder dass blinkende optische Signale erzeugt werden, oder dass ein optisches Signalmittel (z.B. eine LED), das vorzugsweise mittig zwischen den Signalmitteln, die zur Erzeugung der sich in die entgegengesetzten Richtungen erstreckenden optischen Signale angeordnet ist, ein die gewünschte Verstellposition kennzeichnendes optisches Signal erzeugt. Bevorzugt erstrecken sich die Richtungen, in denen optische Signale erzeugbar sind, in Längsrichtung des Entfernungsmessers. Es liegt im Rahmen der Erfindung, dass sich die Anzeigemittel zumindest näherungsweise über die gesamte Längserstreckung des Entfernungsmessers erstrecken können. Besonders bevorzugt ist eine Ausführungsform, bei der die Größe der Verstellstrecke, also ein Teilabschnitt der gesamten Messstrecke, im Maßstab 1:1 oder in einem anderen, vorzugsweise einstellbaren Maßstab mittels der Anzeigeeinrichtung optisch visualisiert wird.

Zur Ausbildung der Anzeigemittel gibt es wiederum eine Vielzahl von Möglichkeiten. Besonders bevorzugt ist eine Ausführungsform, bei der die Anzeigemittel eine Vielzahl von, insbesondere in einer Reihe angeordneten, einzeln oder in Gruppen ansteuerbaren LEDs umfassen, die ein optisches, als Signalspur ausgebildetes Signal darstellen können. Bei einer derartigen Ausführungsform wird ein bei einem Flüssigkeitskristalldisplay zwangsläufig auftretender Paralaxfehler mit Vorteil vermieden. Bevorzugt sind die Anzeigemittel derart ausgebildet, dass ausgehend von einem Bezugspunkt der Anzeigemittel, vorzugsweise der Mitte der Anzeigemittel, in zwei einander entgegengesetzte Richtungen Signalspuren unterschiedlicher Länge erzeugt werden können, wobei die Länge der jeweiligen Signalspur bevorzugt die Größe der Verstellstrecke und die Richtung der Signalspur ausgehend von dem Bezugspunkt der Anzeigemittel die Verstellrichtung kennzeichnet. Die Anzeigemittel sind also mit Vorteil in einen ersten Anzeigebereich zur Kennzeichnung eines Überschreitens eines vorgegebenen Abstandes und einen zweiten Anzeigebereich zur Anzeige der Unterschreitung des vorgegebenen Abstandes unterteilt.

Gemäß einer alternativen Ausführungsform der Anzeigemittel umfassen diese ein Display, beispielsweise eine Flüssigkristallanzeige, auf dem das optische Signal bzw. die optischen Signale als die Verstellrichtung kennzeichnende Pfeile oder Balken, insbesondere variabler Länge darstellbar sind. Bei dem Display kann es sich um dasselbe Display handeln, auf dem auch der zu messende Abstand zahlenmäßig angegeben ist.

Zusätzlich oder alternativ zu einer optischen Signalisierung können akustische Mittel zur Signalisierung der Verstellrichtung und/oder der Verstellstreckengröße und/oder des Erreichens der gewünschten Verstellposition vorgesehen werden. Beispielsweise ist es möglich, die unterschiedlichen Verstellrichtungen durch unterschiedliche Tonhöhen zu kennzeichnen. Daneben ist es denkbar, die Größe der Verstellstrecken durch unterschiedliche Tonfolgefrequenzen (Ton-Pause-Ton-Pause-etc.) zu kennzeichnen, wobei die Frequenz bei abnehmender Verstellstrecke vorzugsweise größer wird. Ebenso ist es denkbar, das Erreichen der gewünschten Verstellposition akustisch zu kennzeichnen, beispielsweise durch einen lang anhaltenden Ton. In Analogie zur Änderung der Tonfrequenz kann die Größe der Verstellstrecke optisch durch eine Variation der Blinkfrequenz eines optischen Signals dargestellt werden, beispielsweise derart, dass die Blinkfrequenz mit zunehmender Annäherung an den Sollwert, d.h. den vorgegebenen Abstand, zunimmt.

Zur Eingabe eines einzustellenden Abstandes sind in Weiterbildung der Erfindung Eingabemittel, beispielsweise in Form eines Touchscreens und/oder mindestens einer Eingabetaste vorgesehen.

In Weiterbildung der Erfindung ist mit Vorteil vorgesehen, dass Mittel zur Kennzeichnung des vorgegebenen Abstandes auf einen zu messenden Gegenstand vorgesehen sind. Dabei liegt es im Rahmen der Erfindung, dass die Kennzeichnung (Markierung) optisch, beispielsweise mittels eines Laserstrahls, insbesondere eines Linienlasers, oder mechanisch, beispielsweise mittels eines Stempelmechanismus und/oder eines Farbstiftes erfolgt. Es liegt im Rahmen der Weiterbildung der Erfindung, dass die Kennzeichnung des vorgegebenen Abstandes auf dem zu vermessenden Gegenstand gleichzeitig als Signalisierung des Erreichens der gewünschten Verstellposition dient. Dies kann beispielsweise dadurch realisiert werden, dass der zur Kennzeichnung des vorgegebenen Abstandes dienende Laserstrahl erst bei Erreichen der gewünschten Verstellposition auf das Messobjekt ausgesendet wird.

Ferner ist es denkbar, dass ein Markierungslaserstrahl zur Markierung des vorgegebenen Abstandes auf einem zu vermessenden Gegenstand nicht erst bei Erreichen der gewünschten Verstellposition erzeugt wird, sondern beispielsweise während der gesamten Messung auf das Messobjekt projiziert wird, wobei in diesem Fall das Erreichen der gewünschten Verstellposition beispielsweise durch einen Farbumschlag des Markierungslaserstrahls angezeigt werden kann.

Besonders bevorzugt ist eine Ausführungsform, bei der zur Markierung des vorgegebenen Abstandes bzw. einer Grenze des vorgegebenen Abstandes auf einem zu vermessenden Gegenstand eine Projektionseinheit zur Projektion einer Lasermarkierung auf dem zu vermessenden Gegenstand vorgesehen ist. Bevorzugt ist die Projektionseinheit derart ausgebildet, dass diese den vorgegebenen Abstand markiert, sobald sich dieser im Wirkbereich der Projektionseinheit befindet. In Weiterbildung ist vorgesehen, dass ein weiteres Verschieben des Entfernungsmessers lediglich dazu führt, dass der Entfernungsmesser relativ zu der ortsfesten Lasermarkierung verstellt wird bzw. die Austrittsstelle des Lasermarkierungsstrahls entlang der Projektionseinheit des Entfernungsmessers wandert. Anders ausgedrückt, wandert bei einer derartigen Ausführungsform der Bezugspunkt des Entfernungsmessers automatisch entlang dessen Längserstreckung. Eine derartige Projektionseinheit kann beispielsweise durch mehrere in Reihe nebeneinander angeordnete Ausgangsöffnungen für einen Laserstrahl, oder durch eine Vielzahl von Laserstrahlquellen, die nebeneinander angeordnet sind, realisiert werden. Mit einer derartig ausgebildeten Projektionseinheit ist es zudem möglich, gleichzeitig mehrere vorgegebene Abstände gleichzeitig auf einem zu vermessenden Gegenstand zu markieren.

In Weiterbildung der Erfindung ist mit Vorteil vorgesehen, dass als Messsignal von dem Entfernungsmesser nicht ein punktförmiger, sondern ein linienförmiger Laserstrahl erzeugt wird, der insbesondere, wenn er den Entfernungsmesser im Bereich einer Gehäuseaußenkante verlässt zusätzlich zur Ausrichtung einer Werkstückkante genutzt werden kann. Dies ermöglicht ein exaktes Anzeichnen von Markierungen auf einer zweiten, fakultativen, zu dieser Messlaserlinie orthogonalen Laserlinie, die insbesondere (erst) bei Erreichen des Sollwertes erzeugt wird. Auf diese Weise kann nicht nur das Längenmaß eines Gegenstandes festgelegt, sondern auch Vorkehrungen getroffen werden, um das Werkstück später exakt im rechten Winkel bearbeiten zu können.

Von besonderem Vorteil ist eine Ausführungsform, bei der der Entfernungsmesser die Funktionalität eines Taschenrechners aufweist, wobei mit dem Entfernungsmesser zumindest eine Grundrechenart, vorzugsweise zumindest sämtliche Grundrechenarten, ausführbar sind. Hierdurch können einzustellende bzw. zu übertragende Abstände bequem unmittelbar mit dem Entfernungsmesser berechnet werden.

Die Erfindung führt auch auf ein Entfernungsmesssystem mit einem zuvor beschriebenen Entfernungsmesser und einem mit Abstand zu dem Entfernungsmesser anordnenbaren Element. Durch die Kombination von Entfernungsmesser und beabstandetem Element können vorgegebene Abstände, d.h. Strecken, auch auf flachen Elementen, wie Brettern, übertragen werden, wobei die Messung des Abstandes zwischen einem Bezugspunkt des Entfernungsmessers und des, insbesondere verstellbaren, Elementes erfolgt.

### Kurze Beschreibung der Zeichnungen

Weitere Merkmale, Vorteile und Einzelheiten der Erfindung ergeben sich aus der nachfolgenden Beschreibung bevorzugter Ausführungsbeispiele sowie anhand der Zeichnungen. Diese zeigen in:
- Fig. 1:: eine Ausführungsform eines Entfernungsmesssystems mit einem Entfernungsmesser und einem zu diesem beabstandeten Element,
- Fig. 2:: eine Darstellung einer möglichen Vorgehensweise bei der Übertragung eines bestimmten Abstandes auf ein Werkstück,
- Fig. 3:: ein Entfernungsmesssystem mit einem Entfernungsmesser, bei dem die Verstellrichtung durch Pfeile in einem Display dargestellt wird,
- Fig. 4:: ein Entfernungsmesssystem mit einem Entfernungsmesser, der eine Projektionseinheit aufweist, die derart beschaffen ist, dass der Entfernungsmesser relativ zu einer auf ein Werkstück projizierten, einen vorgegebenen Abstand kennzeichnenden Lasermarkierung verstellbar ist und
- Fig. 5:: ein weiteres Ausführungsbeispiel eines Entfernungsmesssystems mit einem Entfernungsmesser, bei dem bei Überfahren einer gewünschten Verstellposition eine (dauerhafte) Markierung des vorgegebenen Abstandes auf einem Werkstück erfolgt.

### Ausführungsformen der Erfindung

In den Figuren sind gleiche Bauteile und Bauteile mit der gleichen Funktion mit den gleichen Bezugszeichen gekennzeichnet.

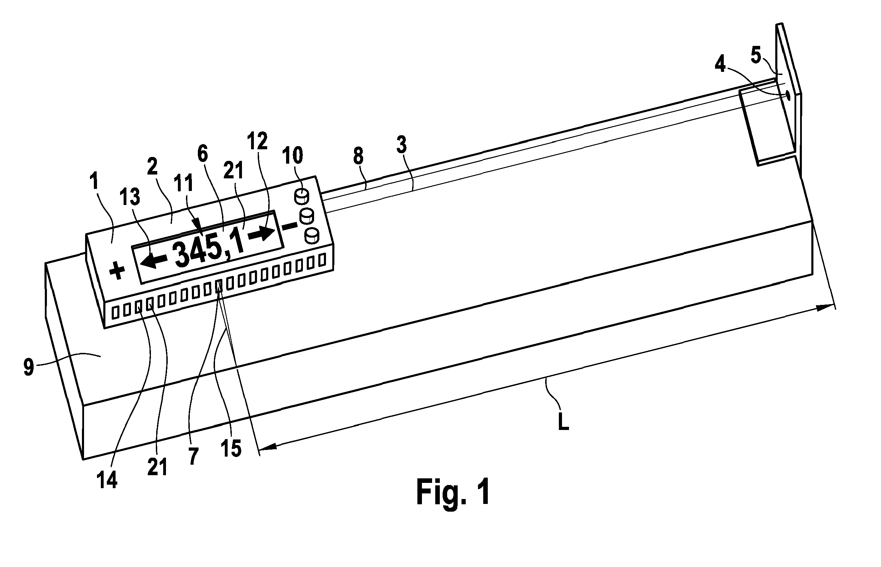

In Fig. 1 ist ein Entfernungsmesssystem mit einem als Laserentfernungsmesser ausgebildeten Entfernungsmesser 1 gezeigt. Der Entfernungsmesser 1 umfasst ein Gehäuse 2 mit einer eine Optik umfassenden Signalerzeugungseinheit (nicht gezeigt) zur Erzeugung eines Messsignals 3 in Form eines Laserstrahl, der einen Laserpunkt 4 auf einem zu dem Entfernungsmesser 1 beabstandet angeordneten, in diesem Ausführungsbeispiel verstellbaren Element 5 erzeugt. Das Messsignal 3 wird von dem beabstandeten Element 5 zurückreflektiert und von einer nicht dargestellten Sensoreinheit des Entfernungsmessers 1 in an sich bekannter Weise detektiert und daraufhin in einer Elektronikeinheit verarbeitet und ausgewertet, derart, dass, beispielsweise über eine Laufzeitbestimmung, der Abstand zwischen einem Bezugspunkt 7 des Entfernungsmessers 1 und dem beabstandeten Element 5 erhalten wird, wobei das Messergebnis in Zahlenform auf einem Display 6 dargestellt wird. Alternativ zu dem mit dem Bezugszeichen 3 gekennzeichneten Messsignal zur Erzeugung des Laserpunktes 4 auf dem beabstandeten Element können die Signalerzeugungsmittel bzw. deren Optik derart ausgebildet sein, dass ein mit dem Bezugszeichen 8 gekennzeichnetes Messsignal 8 erzeugt wird, das auf einen zu vermessenden Gegenstand 9 eine Linie erzeugt, wobei diese Linie vorzugsweise im Randbereich des Gehäuses 2 den Entfernungsmesser verlässt, so dass die Linie zum Ausrichten des Gegenstandes 9, etc. genutzt werden kann.

Der Entfernungsmesser 1 umfasst als Tasten ausgebildete Eingabemittel 10, über die ein Abstand vorgebbar, d.h. eingebbar ist, der auf den ebenen Gegenstand 9 übertragen werden soll. Zusätzlich oder alternativ zu den mit dem Bezugszeichen 10 gekennzeichneten Eingabemitteln kann das Display 6 als Touchscreen ausgebildet werden.

Das Display 6 dient, wie erläutert, einerseits zum Anzeigen eines aktuellen und/oder vorgegebenen Messwertes als Zahlenwert und andererseits gleichzeitig als Mittel 21 zur Signalisierung der Verstellrichtung und der Größe des Verstellweges, also zum Erzeugen der optischen Signale 12, 13 in Pfeilform, wobei das mit dem Bezugszeichen 13 gekennzeichnete optische Signal dann angezeigt wird, wenn der vorgegebene Abstand überfahren wird (gekennzeichnet durch das Pluszeichen). Bei Unterschreiten des vorgegebenen Abstandes zwischen dem Bezugspunkt 7 und dem Element 5 leuchtet das optische Signal 12 auf (gekennzeichnet durch ein Minuszeichen). Die Längserstreckung des jeweiligen optischen Signals 12, 13 kennzeichnet dabei die Größe der Verstellstrecke, um die der Entfernungsmesser 1 verstellt werden muss, um die gewünschte Verstellposition zu erreichen, in der der vorgegebene Abstand eingestellt ist.

In diesem Ausführungsbeispiel sind zusätzlich zu den Mitteln 6 zur Erzeugung der optischen Signale 12, 13 zum Anzeigen der Verstellrichtung bzw. der Verstellstreckengröße in einer Reihe angeordnete, ebenfalls Mittel 6 zur Signalisierung bildende Leuchtmittel 14 (hier LEDs) vorgesehen. In der Zeichnungsebene links von dem Bezugspunkt 7 wird eine Signalspur durch Ansteuern der Leuchtmittel 14 erzeugt, wenn der vorgegebene Abstand überschritten wurde, der Entfernungsmesser also in Richtung des Elementes 5 verstellt werden muss. Dabei ist die Länge der erzeugten Leuchtspur ein Maß für die Größe der zurückzulegenden Verstellstrecke. Analog wird eine Leuchtspur von den Leuchtmitteln 14 mit einer Erstreckung in der Zeichnungsebene nach rechts ausgehend von dem Bezugspunkt 7 erzeugt, sobald der vorgegebene Abstand unterschritten wurde, der Entfernungsmesser 1 in der Folge also in eine von dem Element 5 wegweisende Verstellrichtung verstellt werden muss, wobei auch hier die Länge der Leuchtspur ein Maß für die Größe der zurückzulegenden Verstellstrecke ist. Selbstverständlich liegt es im Rahmen der Erfindung, die optischen Signale 12, 13 und die Leuchtmittel 14 lediglich alternativ vorzusehen. Zum Kennzeichnen des Erreichens der gewünschten Verstellposition, in der der vorgegebene Abstand, in diesem Ausführungsbeispiel L (345,1 mm), zwischen dem Bezugspunkt 7 und dem Element 5 eingestellt wurde, wird dies durch einen akustischen Dauerton, sowie das Blinken beider optischen Signale 12, 13 sowie das Blinken sämtlicher Leuchtmittel 14 signalisiert. Gleichzeitig wird die Lage des Bezugpunktes 7 und damit der vorgegebene Abstand mittels einer Lasermarkierung 15, die orthogonal zu dem Messsignal 3, 8 verläuft, gekennzeichnet. An dieser Stelle kann beispielsweise händisch mittels eines Stiftes eine Markierung angebracht werden.

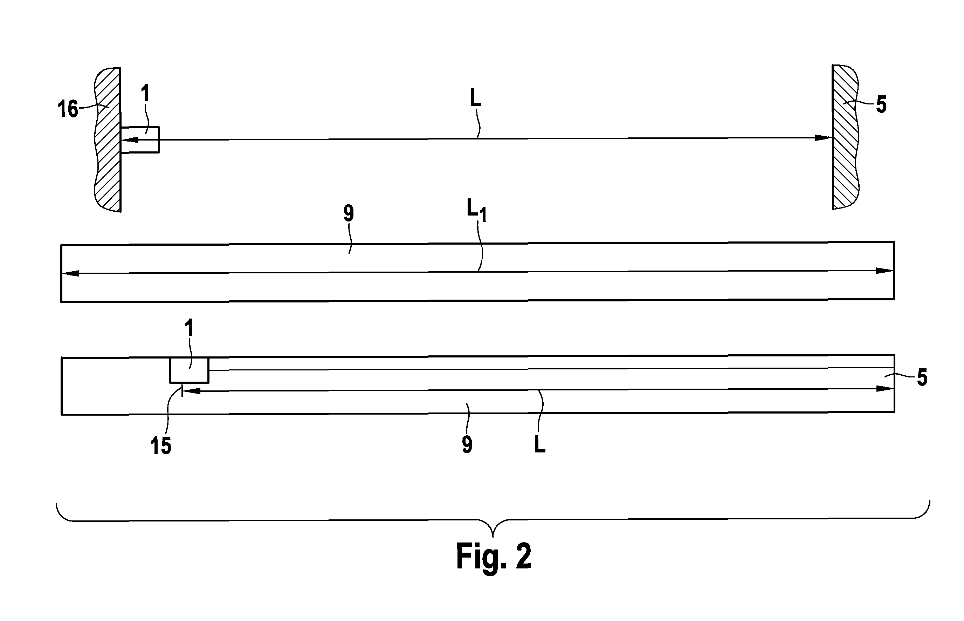

Im Folgenden wird ein in Fig. 2 schematisiert dargestellter Messvorgang erläutert. Zunächst wird mit dem Entfernungsmesser 1 gemäß Fig. 1 ein Abstand L zwischen einem Element 5 und einem weiteren Element 16, in diesem Ausführungsbeispiel beides Wandbegrenzungen, gemessen und in dem Entfernungsmesser 1 durch Betätigen einer in Fig. 1 nicht gezeigten Speichertaste als vorgegebener Abstand zwischengespeichert. Diesen vorgegebenen Abstand L gilt es auf einen Gegenstand 9 mit der Länge L₁ zu übertragen. Der Entfernungsmesser 1 wird solange verschoben, bis der Entfernungsmesser 1 das Erreichen der gewünschten Verstellposition und damit des vorgegebenen Abstandes signalisiert. Mittels der Lasermarkierung 15 wird dieser vorgegebene Abstand auf dem Gegenstand 9 markiert und beispielsweise mittels eines Bleistiftes nachgezeichnet, so dass der Gegenstand 9 in einem späteren Arbeitsschritt entsprechend gekürzt werden kann.

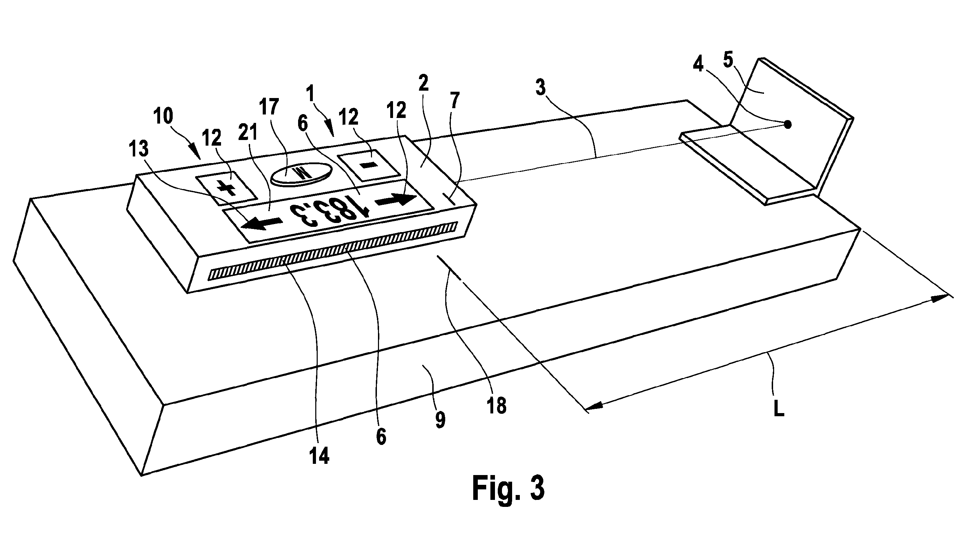

In Fig. 3 ist ein Entfernungsmesssystem mit einem abgewandelten Entfernungsmesser 1 gezeigt. Zur Vermeidung von Wiederholungen werden im Folgenden im Wesentlichen lediglich die Unterschiede zu dem Entfernungsmesser 1 gemäß Fig. 1 erläutert. Bezüglich der Gemeinsamkeiten wird auf die vorangehende Figurenbeschreibung verwiesen. Auf dem Gehäuse 2 sind als Eingabetasten ausgebildete und mit Plus-/Minuszeichen gekennzeichnete Eingabemittel 10 zur Eingabe einer zu übertragenden Strecke vorgesehen. Die als Display ausgebildeten Signalisierungsmittel 21 sind beleuchtet, so dass der Entfernungsmesser 1 auch im Dunkeln eingesetzt werden kann. Wie aus Fig. 3 zu erkennen ist, ist der Entfernungsmesser 1 mit einer Speichertaste 17 zum Zwischenspeichern von Messwerten versehen. Als Pfeile ausgebildete optische Signale 12, 13, die von den Signalisierungsmitteln 21 generiert werden können, dienen zur Kennzeichnung der Verstellrichtung und der Größe der Verstellstrecke. Der Bezugspunkt 7 ist als Kennzeichnung am Gehäuse ausgebildet. Nachdem der Entfernungsmesser 1 das Erreichen der gewünschten Verstellposition signalisiert, kann der Bezugspunkt 7 mit einer Strichkennzeichnung 18 händisch auf einen zu vermessenden Gegenstand 9 (Werkstück) übertragen werden. Zusätzlich zur Kennzeichnung der Verstellrichtung und der Verstellstreckengröße über die optischen Signale 12, 13 sind analog zu Fig. 1 weitere Signalisierungsmittel 21 in Form einer Reihe von Leuchtmitteln 14 vorgesehen.

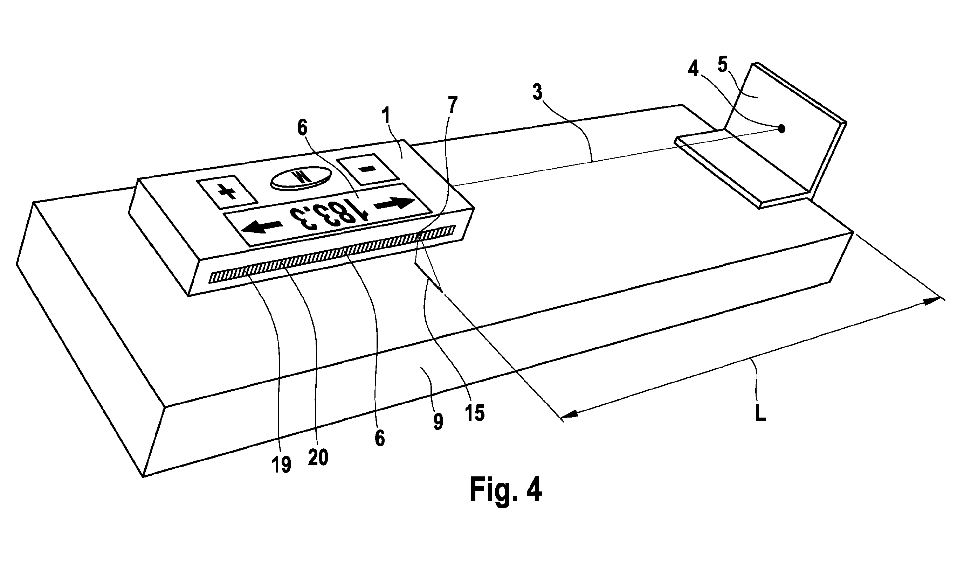

In Fig. 4 ist ein alternatives Entfernungsmesssystem mit einem abgewandelten Entfernungsmesser 1 dargestellt. Zur Vermeidung von Wiederholungen wird lediglich auf die Unterschiede zu dem Ausführungsbeispiel gemäß Fig. 3 eingegangen. Der Entfernungsmesser 1 gemäß Fig. 4 weist anstelle der als Reihe von Leuchtmitteln 14 ausgebildeter Signalisierungsmittel 21 eine als Markierungsmittel 20 dienende Projektionseinheit 19 zum Aufbringen einer Lasermarkierung 15 auf einem zu vermessenden Gegenstand 9 auf. Dabei kann die Lasermarkierung 15 bzw. der Laserstrahl zur Markierung des Bezugspunktes 7 bzw. des einzustellenden Abstandes auf dem Gegenstand 9 an unterschiedlichen, nebeneinander angeordneten Positionen der Projektionseinheit 19 den Entfernungsmesser 1 verlassen, so dass der Entfernungsmesser 1 relativ zur Lasermarkierung 15 auf dem Gegenstand 9 verstellt werden kann. Anders ausgedrückt wandert der Bezugspunkt 7 entlang der Längserstreckung der Projektionseinheit 19. Auf diese Weise ist ein sehr schnelles Auffinden und Markieren des vorgegebenen Abstandes auf dem Gegenstand 9 möglich. Ferner ist es denkbar, mehrere vorgegebene Abstände gleichzeitig auf dem Gegenstand 9 zu markieren, sofern diese sich innerhalb der Reichweite der Projektionseinheit 19 befinden.

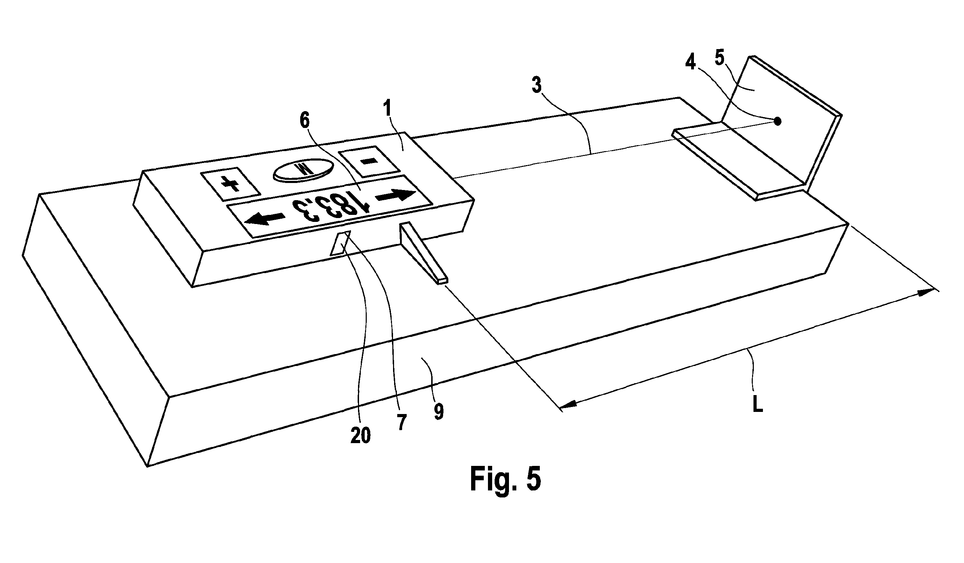

In Fig. 5 ist ein weiteres Ausführungsbeispiel eines Entfernungsmesssystems mit einem abgewandelten Entfernungsmesser 1 vorgesehen. Dieser stimmt im Wesentlichen mit dem Ausführungsbeispiel gemäß Fig. 2 überein. Zur Vermeidung von Wiederholungen wird bezüglich von Gemeinsamkeiten auf die diesbezügliche Figurenbeschreibung verwiesen. Anstelle der Reihe von Leuchtmitteln 14 weist der Entfernungsmesser 1 seitlich Markierungsmittel 20 auf, aus denen bei Überfahren der gewünschten Verstellposition von den Markierungsmitteln 20 eine Markierung auf den Gegenstand 9 aufgebracht wird. In dem gezeigten Ausführungsbeispiel wird mit den Markierungsmitteln 20 ein Tintenstrahl erzeugt. Durch Abspeichern mehrerer vorgegebener Abstände in dem Entfernungsmesser 1 können beim Verstellen des Entfernungsmessers 1 relativ zu dem Element 5 gleichzeitig eine Vielzahl von Markierungen auf den Gegenstand 9 aufgebracht werden.

## Patentansprüche

1. Entfernungsmesser, insbesondere Laserentfernungsmesser, mit Mitteln zum kontinuierlichen Messen eines Abstandes zwischen einem Bezugspunkt (7) des Entfernungsmessers (1) und einem beabstandeten Element (5, 16), wobei Mittel (21) zur Signalisierung einer Verstellrichtung vorgesehen sind, in die der Entfernungsmesser (1) relativ zu dem beabstandeten Element (5, 16) und/oder das beabstandete Element (5, 16) relativ zum Entfernungsmesser (1) zum Einstellen eines vorgebbaren Abstandes zwischen dem Bezugspunkt (7) des Entfernungsmessers (1) und dem beabstandeten Element (5, 16) verstellt werden müssen/muss, wobei Mittel, insbesondere optische und/oder mechanische Mittel (20), zur Markierung des vorgegebenen Abstandes bzw. des Bezugspunktes (7) auf einem zu vermessenden Gegenstand (9) vorgesehen sind.

2. Entfernungsmesser nach Anspruch 1, **dadurch gekennzeichnet, dass** Mittel (21) zur Signalisierung der Größe der Verstellstrecke vorgesehen sind, um die der Entfernungsmesser (1) und/oder das beabstandete Element (5, 16) zum Einstellen des vorgebbaren Abstandes zwischen dem Bezugspunkt (7) des Entfernungsmessers (1) und dem beabstandeten Element (5, 16) verstellt werden müssen/muss.

3. Entfernungsmesser nach einem der vorhergehenden Ansprüche, **dadurch gekennzeichnet, dass** Mittel zur Signalisierung des Erreichens der gewünschten Verstellposition des Entfernungsmessers (1), in der der vorgebbare Abstand eingestellt ist, vorgesehen sind.

4. Entfernungsmesser nach einem der vorhergehenden Ansprüche, **dadurch gekennzeichnet, dass** optische und/oder akustische Mittel (21) zur Signalisierung der Verstellrichtung und/oder der Größe der Verstellstrecke und/oder des Erreichens der gewünschten Verstellposition vorgesehen sind.

5. Entfernungsmesser nach Anspruch 4, **dadurch gekennzeichnet, dass** die optischen Mittel (21) zur Signalisierung derart ausgebildet sind, dass sie in Abhängigkeit der Relativposition des Bezugspunktes (7) des Entfernungsmessers (1) zu der gewünschten Verstellposition, bei deren Erreichen der vorgegebene Abstand zwischen dem Bezugspunkt (7) und dem beabstandeten Element (5, 16) eingestellt ist, ein sich in eine von zwei einander entgegengesetzten, insbesondere in Längsrichtung des Entfernungsmessers (1) verlaufenden, Richtungen erstreckendes optisches Signal (12, 13), vorzugsweise variabler Länge, erzeugen können, wobei die jeweilige Richtung, in die sich das optische Signal (12, 13) erstreckt, die Verstellrichtung und/oder die Längenerstreckung des optischen Signals (12, 13) die Größe der Verstellstrecke kennzeichnet.

6. Entfernungsmesser nach Anspruch 5, **dadurch gekennzeichnet, dass** die Mittel (21) zur optischen Signalisierung eine Vielzahl von, insbesondere in einer Reihe angeordneten, einzeln oder in Gruppen ansteuerbaren Leuchtmitteln (14), insbesondere LEDs, umfassen, und dass das optische Signal (12, 13) als Signalspur ausgebildet ist.

7. Entfernungsmesser nach einem der Ansprüche 5 oder 6, **dadurch gekennzeichnet, dass** die Mittel (21) zur optischen Signalisierung ein Display (6) umfassen, auf dem die optischen Signale (12, 13) als die Verstellrichtung und/oder die Größe der Verstellstrecke kennzeichnende Pfeile, insbesondere variabler Länge darstellbar sind.

8. Entfernungsmesser nach einem der Ansprüche 4 bis 7, **dadurch gekennzeichnet, dass** die akustischen Mittel zur Signalisierung der Verstellrichtung unterschiedliche Verstellrichtungen durch unterschiedliche Tonhöhen und/oder die akustischen Mittel zur Signalisierung der Größe der Verstellstrecke unterschiedliche Verstellstreckengrößen durch unterschiedliche Tonfolge-frequenzen und/oder die akustischen Mittel zur Signalisierung des Erreichens der gewünschten Verstellposition das Erreichen der gewünschten Verstellposition durch einen lang anhaltenden Ton, insbesondere einen Dauerton, signalisierend ausgebildet sind.

9. Entfernungsmesser nach einem der vorhergehenden Ansprüche, **dadurch gekennzeichnet, dass** Eingabemittel (6, 10), insbesondere ein Touchscreen und/oder mindestens eine Eingabetaste, zum Vorgeben des einzustellenden Abstandes vorgesehen sind.

10. Entfernungsmesser nach einem der vorhergehenden Ansprüche, **dadurch gekennzeichnet, dass** ein gemessener Abstand als vorgebbarer Abstand, insbesondere durch Betätigen einer Speichertaste, abspeicherbar ist.

11. Entfernungsmesser nach Anspruch 1, **dadurch gekennzeichnet, dass** als Mittel (20) zur Markierung eine Projektionseinheit (19) zur Projektion einer den vorgegebenen Abstand markierenden Lasermarkierung (15) auf einem zu vermessenden Gegenstand (9) vorgesehen ist, wobei die Projektionseinheit (19) derart ausgebildet ist, dass der Entfernungsmesser (1) relativ zu der ortsfesten Lasermarkierung (15) verstellbar ist.

12. Entfernungsmesser nach einem der Ansprüche 1 oder 11, **dadurch gekennzeichnet, dass** die Mittel (20) zur Markierung beim Erreichen oder Überfahren der gewünschten Verstellposition eine dauerhafte Markierung beispielsweise eine Tintenmarkierung, auf dem Gegenstand (9) erzeugend ausgebildet sind.

13. Entfernungsmesser nach einem der vorhergehenden Ansprüche, **dadurch gekennzeichnet, dass** der Entfernungsmesser (1) einen linienförmigen Laserstrahl aussendend ausgebildet ist.

14. Entfernungsmesssystem mit einem Entfernungsmesser (1) nach einem der vorhergehenden Ansprüchen und mit einem mit Abstand zu dem Entfernungsmesser (1) anordenbaren Element (5, 16).

15. Entfernungsmesssystem nach Anspruch 14, **dadurch gekennzeichnet, dass** das Element (5, 16) einen 90°-Winkel-Abschnitt aufweist.

## Claims

1. Distance meter, in particular laser distance meter, having means for continuously measuring a distance between a reference point (7) of the distance meter (1) and a spaced-apart element (5, 16), means (21) being provided for signalling an adjustment direction in which the distance meter (1) must be adjusted relative to the spaced-apart element (5, 16) and/or the spaced-apart element (5, 16) must be adjusted relative to the distance meter (1) in order to set a predefinable distance between the reference point (7) of the distance meter (1) and the spaced-apart element (5, 16), means, in particular optical and/or mechanical means (20), being provided for marking the predefined distance or the reference point (7) on an object (9) to be measured.

2. Distance meter according to Claim 1, **characterized in that** means (21) are provided for signalling the size of the adjustment distance by which the distance meter (1) and/or the spaced-apart element (5, 16) must be adjusted in order to set the predefinable distance between the reference point (7) of the distance meter (1) and the spaced-apart element (5, 16).

3. Distance meter according to one of the preceding claims, **characterized in that** means are provided for signalling the reaching of the desired adjustment position of the distance meter (1) in which the predefinable distance is set.

4. Distance meter according to one of the preceding claims, **characterized in that** optical and/or acoustic means (21) are provided for signalling the adjustment direction and/or the size of the adjustment distance and/or the reaching of the desired adjustment position.

5. Distance meter according to Claim 4, **characterized in that** the optical signalling means (21) are designed in such a manner that, on the basis of the position of the reference point (7) of the distance meter (1) relative to the desired adjustment position, upon the reaching of which the predefined distance between the reference point (7) and the spaced-apart element (5, 16) is set, they can generate an optical signal (12, 13), preferably of variable length, which extends in one of two mutually opposite directions, in particular directions running in the longitudinal direction of the distance meter (1), the respective direction in which the optical signal (12, 13) extends, the adjustment direction and/or the longitudinal extent of the optical signal (12, 13) indicating the size of the adjustment distance.

6. Distance meter according to Claim 5, **characterized in that** the optical signalling means (21) comprise a multiplicity of luminous means (14), in particular LEDs, which are arranged, in particular, in a row and can be controlled individually or in groups, and **in that** the optical signal (12, 13) is in the form of a signal trace.

7. Distance meter according to either of Claims 5 and 6, **characterized in that** the optical signalling means (21) comprise a display (6) on which the optical signals (12, 13) can be displayed as arrows, in particular of variable length, which indicate the adjustment direction and/or the size of the adjustment distance.

8. Distance meter according to one of Claims 4 to 7, **characterized in that** the acoustic means for signalling the adjustment direction are designed to signal different adjustment directions by means of different pitches and/or the acoustic means for signalling the size of the adjustment distance are designed to signal different adjustment distance sizes by means of different tone sequence frequencies and/or the acoustic means for signalling the reaching of the desired adjustment position are designed to signal the reaching of the desired adjustment position by means of a sustained tone, in particular a continuous tone.

9. Distance meter according to one of the preceding claims, **characterized in that** input means (6, 10), in particular a touchscreen and/or at least one input button, are provided for predefining the distance to be set.

10. Distance meter according to one of the preceding claims, **characterized in that** a measured distance can be stored as a predefinable distance, in particular by operating a save button.

11. Distance meter according to Claim 1, **characterized in that** a projection unit (19) for projecting a laser marking (15), which marks the predefined distance, on an object (9) to be measured is provided as the marking means (20), the projection unit (19) being designed in such a manner that the distance meter (1) can be adjusted relative to the stationary laser marking (15).

12. Distance meter according to either of Claims 1 and 11, **characterized in that** the marking means (20) are designed to generate a permanent marking, for example an ink marking, on the object (9) when the desired adjustment position is reached or exceeded.

13. Distance meter according to one of the preceding claims, **characterized in that** the distance meter (1) is designed to emit a linear laser beam.

14. Distance measuring system having a distance meter (1) according to one of the preceding claims and having an element (5, 16) which can be arranged at a distance from the distance meter (1).

15. Distance measuring system according to Claim 14, **characterized in that** the element (5, 16) has a 90°-angle section.

## Revendications

1. Appareil de mesure de distance, notamment appareil de mesure de distance par laser, avec des moyens de mesure en continu d'une distance entre un point de référence (7) de l'appareil de mesure de distance (1) et un élément distant (5, 16), des moyens (21) de signalisation d'une direction de réglage étant prévus indiquant la direction dans laquelle l'appareil de mesure de distance (1) doit être réglé par rapport à l'élément distant (5, 16) et/ou dans laquelle l'élément distant (5, 16) doit être réglé par rapport à l'appareil de mesure de distance (1) pour régler une distance prédéfinissable entre le point de référence (7) de l'appareil de mesure de distance (1) et l'élément distant (5, 16), notamment des moyens (20) optiques et/ou mécaniques de marquage de la distance prédéfinie et/ou du point de référence (7) sur un objet (9) à mesurer.

2. Appareil de mesure de distance selon la revendication 1, **caractérisé en ce que** des moyens (21) de signalisation de la dimension du tronçon de réglage sont prévus indiquant la distance sur laquelle l'appareil de mesure de distance (1) et/ou l'élément distant (5, 16) doit ou doivent être réglés pour régler la distance prédéfinissable prévue entre le point de référence (7) de l'appareil de mesure de distance (1) et l'élément distant (5, 16).

3. Appareil de mesure de distance selon l'une quelconque des revendications précédentes, **caractérisé en ce que** l'on prévoit des moyens de signalisation indiquant que la position de réglage souhaitée de l'appareil de mesure de distance (1) dans laquelle la distance prédéfinissable est réglée est atteinte.

4. Appareil de mesure de distance selon l'une quelconque des revendications précédentes, **caractérisé en ce que** l'on prévoit des moyens (21) optiques et/ou acoustiques de signalisation de la direction de réglage et/ou de la dimension du tronçon de réglage et/ou de l'arrivée à la position de réglage souhaitée.

5. Appareil de mesure de distance selon la revendication 4, **caractérisé en ce que** les moyens (21) optiques de signalisation sont réalisés de telle sorte qu'ils peuvent produire, en fonction de la position relative du point de référence (7) de l'appareil de mesure de distance (1) par rapport à la position de réglage souhaitée lorsque la distance prédéfinie prévue entre le point de référence (7) et l'élément distant (5, 16) est atteinte, un signal optique (12, 13) s'étendant dans des directions opposées deux à deux s'étendant notamment dans la direction longitudinale de l'appareil de mesure de distance (1), de préférence de longueur variable, la direction respective dans laquelle le signal optique (12, 13) s'étend, la direction de réglage et/ou l'extension longitudinale du signal optique (12, 13) caractérisant la dimension du tronçon de réglage.

6. Appareil de mesure de distance selon la revendication 5, **caractérisé en ce que** les moyens (21) de signalisation optique comprennent une pluralité de moyens d'éclairage (14), notamment de DELs, notamment disposés en ligne, pouvant être excités individuellement ou en groupes et que le signal optique (12, 13) prend la forme d'une trace de signal.

7. Appareil de mesure de distance selon l'une quelconque des revendications 5 ou 6, **caractérisé en ce que** les moyens (21) de signalisation optique comprennent un écran (6) sur lequel les signaux optiques (12, 13) peuvent être représentés sous la forme d'une direction de réglage et/ou de flèches caractérisant la dimension du tronçon de réglage, notamment de longueur variable.

8. Appareil de mesure de distance selon l'une quelconque des revendications 4 à 7, **caractérisé en ce que** les moyens acoustiques de signalisation de la direction de réglage sont conçus pour signaler différentes directions de réglage par le biais de différentes hauteurs de ton et/ou que les moyens acoustiques de signalisation de la dimension du tronçon de réglage sont conçus pour signaler différentes dimensions de tronçon de réglage par le biais de différentes fréquences de succession de tons et/ou que les moyens acoustiques de signalisation de l'arrivée à la position de réglage souhaitée sont conçus pour signaler que la position de réglage souhaitée est atteinte par le biais d'un ton maintenu longtemps, notamment d'une tonalité continue.

9. Appareil de mesure de distance selon l'une quelconque des revendications précédentes, **caractérisé en ce que** des moyens de saisie (6, 10), notamment un écran tactile et/ou au moins une touche de saisie, sont prévus pour indiquer la distance à régler.

10. Appareil de mesure de distance selon l'une quelconque des revendications précédentes, **caractérisé en ce qu'**une distance mesurée peut être mémorisée sous la forme d'une distance prédéfinissable, notamment par actionnement d'une touche de mise en mémoire.

11. Appareil de mesure de distance selon la revendication 1, **caractérisé en ce que** les moyens (20) de marquage utilisés sont une unité de projection (19) servant à la projection d'un marquage au laser (15) marquant la distance prédéfinie sur un objet (9) à mesurer, l'unité de projection (19) étant réalisée de telle sorte que l'appareil de mesure de distance (1) peut être réglé par rapport au marquage au laser (15) fixe.

12. Appareil de mesure de distance selon l'une quelconque des revendications 1 ou 11, **caractérisé en ce que** les moyens (20) de marquage sont réalisés de façon à produire, lorsque la position de réglage souhaitée est atteinte ou dépassée, un marquage durable, par exemple un marquage à l'encre, sur l'objet (9).

13. Appareil de mesure de distance selon l'une quelconque des revendications précédentes, **caractérisé en ce que** l'appareil de mesure de distance (1) est réalisé de façon à émettre un faisceau laser en forme de ligne.

14. Système de mesure de distance doté d'un appareil de mesure de distance (1) selon l'une quelconque des revendications précédentes et d'un élément (5, 16) pouvant être placé à une certaine distance par rapport à l'appareil de mesure de distance (1).

15. Système de mesure de distance selon la revendication 14, **caractérisé en ce que** l'élément (5, 16) présente une section d'angle de 90°.
